# FASCICULE DE BREVET EUROPEEN

(11) **EP 3 003 832 B1**
(45) Date de publication et mention de la délivrance du brevet: **30.01.2019**
(21) Numéro de dépôt: 14807896.7
(22) Date de dépôt: 20.05.2014
(51) Int. Cl.: B62D 25/20

(54) **PARTIE AVANT DE LA STRUCTURE D'UN VEHICULE AUTOMOBILE**
VORDERTEIL FÜR DIE STRUKTUR EINES KRAFTFAHRZEUGS
FRONT PORTION OF THE STRUCTURE OF A MOTOR VEHICLE

(30) Priorité: 03.06.2013 FR 1355048
(43) Date de publication de la demande: 13.04.2016
(73) Titulaire: Renault S.A.S., 92100 Boulogne-Billancourt (FR)
(72) Inventeur: BEZEAULT, Loic, F-78100 Versailles (FR); COMA, Gilles, F-78170 La Celle Saint Cloud (FR); DUHEM, Xavier, F-92130 Issy les Moulineaux (FR); GUICHETEAU, Clement, F-17340 Chatelaillon Plage (FR)
(86) Numéro de dépôt international: PCT/FR2014/051161
(87) Numéro de publication internationale: WO 2014/195594

(56) Documents cités:
- EP-A1- 0 941 912
- FR-A1- 2 882 331
- FR-A1- 2 920 126
- US-A1- 2002 175 538

## Description

### Domaine de l'invention :

La présente invention concerne une partie avant de la structure d'un véhicule automobile comprenant un ensemble structurel interposé suivant la direction longitudinale du véhicule entre au moins une traverse avant et un tablier de fermeture de l'habitacle du véhicule. Cette partie avant est communément désignée « bloc avant » par l'homme de l'art.

### Etat de la technique :

La partie avant ou le bloc avant de la structure d'un véhicule est soumise à des contraintes d'architecture sévères, qui doivent prendre en compte l'architecture du groupe motopropulseur (GMP), l'architecture des équipements de liaison au sol (suspension, amortisseurs, direction) et l'architecture de carrosserie de la façade avant. Cette même zone est également soumise à de nombreuses contraintes de prestations du véhicule en matière de chocs, vibrations, acoustique, endurance etc. Le document US 2002/175538 A1 divulgue l'état de la technique le plus proche.

La conception de nouveaux véhicules intègre des objectifs d'allégement de plus en plus ambitieux afin de limiter ou réduire significativement la consommation. Plus les véhicules sont légers, plus il est possible de prévoir un groupe motopropulseur de moindre puissance. Cette démarche permet de réduire la taille des moteurs, ce qui permet de réduire en conséquence les dimensions du bloc avant.

Cependant les véhicules doivent également satisfaire des exigences sévères en termes de sécurité passive et de tenue au choc. Lors d'un choc frontal, le bloc avant du véhicule est fortement sollicité dans le but d'obtenir la meilleure absorption d'énergie et le meilleur passage des efforts : ainsi l'énergie doit être absorbée au maximum dans la partie située en avant de l'habitacle, tout en limitant les intrusions dans l'habitacle proprement dit, ceci devant être obtenu pendant un temps très court correspondant typiquement à un choc. Pour résoudre cette difficulté et obtenir ce comportement, on combine des zones fusibles, des zones plus raides et des pièces aux dimensions adaptées pour optimiser l'absorption d'énergie (absorbeurs ou « crash-box » selon le terme anglais, privilégiant des pliages de pièces).

On note en outre que les structures de blocs avant de véhicules sont classiquement réalisées par l'assemblage d'un grand nombre de pièces métalliques, qui impactent fortement le poids du véhicule ce qui est pénalisant pour les performances en consommation comme évoqué ci-dessus. Cet assemblage de pièces multiples augmente également les coûts de fabrication et d'assemblage.

### But de l'invention :

L'invention a pour but de concilier les contraintes de poids et d'architecture compacte (pour un GMP compact) et une capacité d'absorption maximale en cas de choc.

### Objet de l'invention :

A cet effet, l'invention a pour objet une partie avant de la structure d'un véhicule automobile comprenant un ensemble structurel interposé suivant la direction longitudinale du véhicule entre au moins une traverse avant et un tablier de fermeture de l'habitacle du véhicule, caractérisé en ce que l'ensemble structurel comprend au moins une coque extérieure et au moins une coque intérieure accolées l'une à l'autre, les coques étant conformées pour définir, de chaque côté du véhicule, au moins un raidisseur ayant la forme générale d'un manchon s'étendant sensiblement suivant la direction longitudinale du véhicule, le raidisseur formant une voie de transmission et d'absorption d'effort entre une extrémité correspondante de la traverse avant et le tablier.

La partie avant est constitué d'un ensemble structurel ayant un nombre de pièces significativement réduit et optimisé au regard d'une partie avant classique de l'état de l'art constituée d'éléments métalliques. En outre, la structure et géométrie sont parfaitement optimisées pour l'emploi de matériaux composites offrant un gain de poids substantiel.

Selon d'autres caractéristiques avantageuses de l'invention :
- l'ensemble structurel est réalisé en matériau composite, à base d'une matrice en résine thermodurcissable ou thermoplastique et d'un renfort en fibres de verre ou de carbone,
- l'ensemble structurel comprend d'une part deux coques extérieures gauche et droite, et d'autre part deux coques intérieures gauche et droite, les coques étant assemblées deux par deux à gauche et à droite pour former un sous-ensemble de coques extérieure et intérieur gauche et un sous-ensemble de coque extérieur et intérieur droit,
- les coques de chaque sous ensemble gauche et droit sont conformées pour définir, de chaque côté du véhicule, au moins un raidisseur supérieur et un raidisseur inférieur ayant chacun la forme générale d'un manchon s'étendant sensiblement suivant la direction longitudinale du véhicule, les raidisseurs supérieurs et inférieurs formant des voies de transmission et d'absorption d'effort respectivement supérieure et inférieure entre d'une part des extrémités correspondantes d'une traverse avant supérieure et d'une traverse avant inférieure, et d'autre part le tablier,
- les sous-ensembles de coques gauche et droit comprennent chacun un corps principal ayant la forme générale d'une paroi sensiblement verticale dans laquelle sont conformés les raidisseurs supérieur et inférieur, les sous-ensembles étant chacun pourvus à leur base d'extensions se raccordant sensiblement dans une zone médiane du véhicule, considéré suivant la direction transversale, ces extensions formant des entretoises ou éléments transversaux s'étendant sensiblement suivant la direction transversale du véhicule,
- les raidisseurs supérieurs sont chacun fixés dans leur partie arrière à une zone d'appui médiane du tablier située dans la demi-moitié inférieure de celui-ci, considéré suivant la direction verticale, ces raidisseurs supérieurs surplombant les raidisseurs inférieurs fixés chacun à une zone d'appui inférieure du tablier située sensiblement au niveau d'un plancher de la structure du véhicule,
- chaque raidisseur supérieur comporte une partie arrière creuse emmanchée sur un plot correspondant conformé sur la zone d'appui médiane du tablier, des moyens de fixation additionnels notamment par vissage étant prévus pour solidariser le raidisseur supérieur et le plot correspondant,
- les extensions raccordant les sous-ensembles de coques gauche et droit comprennent une entretoise centrale s'étendant sensiblement horizontalement ainsi qu'un élément transversal arrière ayant la forme générale d'une cornière à section en L dont une première branche s'étend sensiblement horizontalement et une seconde branche s'étend sensiblement verticalement, ces extensions étant formées par la superposition des coques extérieure et intérieure,
- une partie au moins des raidisseurs supérieurs et inférieurs à la forme générale d'un manchon s'évasant de l'avant vers l'arrière,
- les coques intérieure et extérieure sont fixées par collage,
- les coques intérieure et extérieure sont fixées par laser ou induction,
- les coques intérieure et extérieure sont fixées par des moyens de fixation positive, du type vis-écrou, rivet ou équivalent,
- au moins l'une des traverses avant supérieure et inférieure est métallique,
- au moins l'une des traverses avant supérieure et inférieure est réalisée en matériau composite à base d'une matrice en résine thermodurcissable ou thermoplastique et d'un renfort en fibres de verre ou de carbone,
- l'épaisseur des coques est comprise entre 2 et 5mm, et est en particulier de 3,5mm.

L'invention a également pour objet un véhicule automobile comprenant une partie avant de structure ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective d'une partie avant (ou bloc avant) de la structure d'un véhicule automobile suivant l'invention illustrant l'ensemble structurel interposé entre les traverses avant et le tablier (non illustré) du véhicule,
- la figure 2 représente une vue en perspective éclatée de la partie avant de la figure 1,
- la figure 3 est une vue de dessous de la partie avant de la figure 1,
- la figure 4 est une vue de face, c'est-à-dire depuis l'avant du véhicule, de la partie avant de la figure 1,
- la figure 5 est une vue agrandie d'un détail de réalisation A de la partie avant de la figure 4,
- la figure 6 est une vue de dessus de la partie avant de la figure 1,
- la figure 7 est une vue de côté de la partie avant de la figure 1, en l'occurrence une vue du côté droit, et
- les figures 8A, 8B et 8C représentent la forme et les dimensions de trois sections S1, S2, S3 transversales successives suivant des plans YZ, au droit du sous-ensemble de coques intérieure et extérieur côté gauche, pour différentes valeurs de X à -120 mm, -260 mm et -370 mm (origine O du repère représentée aux figures 3 et 6),
- la figure 9 représente la partie principale de la structure du véhicule sur laquelle vient se fixer en partie avant de structure selon l'invention.

Dans le présent texte, les indications de directions et d'orientation sont données en référence à un repère classique XYZ utilisé en conception automobile, dans lequel X est la direction longitudinale du véhicule, dirigé vers l'arrière, Y la direction transversale du véhicule, dirigé vers la droite, et Z la direction verticale, dirigée vers le haut. Les notions « avant », « arrière », « gauche » et « droite » sont indiquées en relation avec l'orientation « avant-arrière » et le sens de marche classique du véhicule.

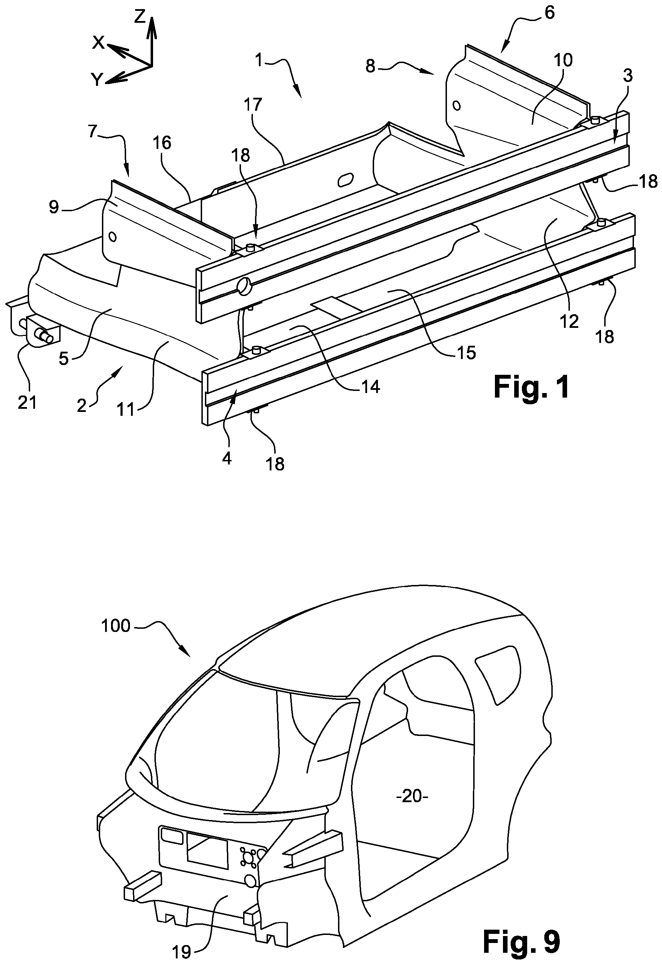

On a représenté sur les figures une partie avant 1 (autrement appelée « bloc avant ») selon l'invention de la structure d'un véhicule automobile. Cette partie avant est destinée à se raccorder à la partie principale de la structure du véhicule 100 représentée à la figure 9, comprenant typiquement le plancher ou soubassement du véhicule, l'habitacle 20 qui est délimité dans sa partie avant par le tablier 19, la structure 100 comprenant encore les pieds avant, les pieds milieu, le toit etc. Ces éléments font généralement partie de l'ensemble désigné sous le terme « caisse en blanc » et sont typiquement réalisés en tôles embouties et assemblées essentiellement par soudure. La partie avant 1 avant accueille typiquement le groupe motopropulseur (GMP) du véhicule, bien que l'invention ne soit pas réduite à cette configuration et puisse également s'appliquer à des véhicules pourvus de GMP arrière.

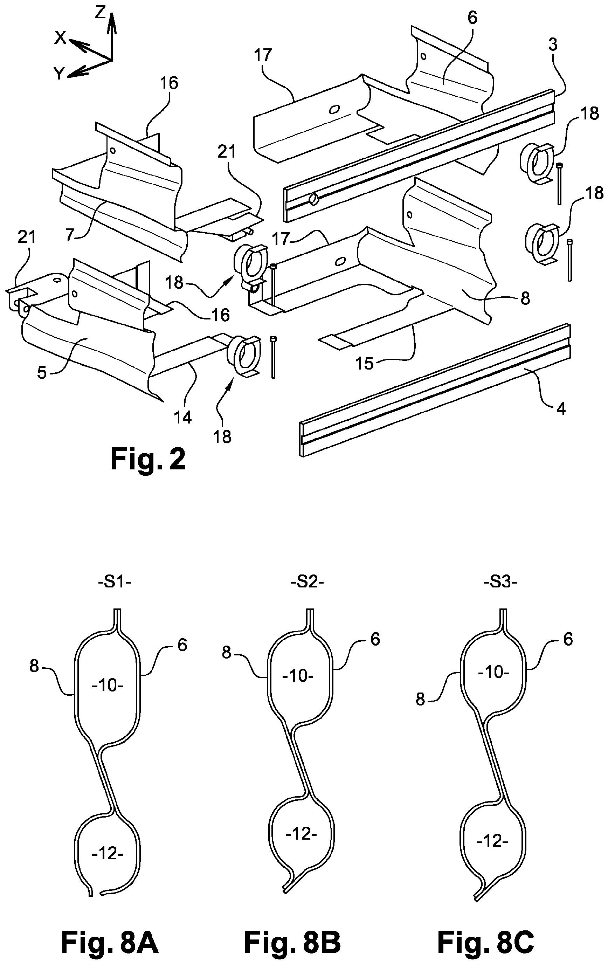

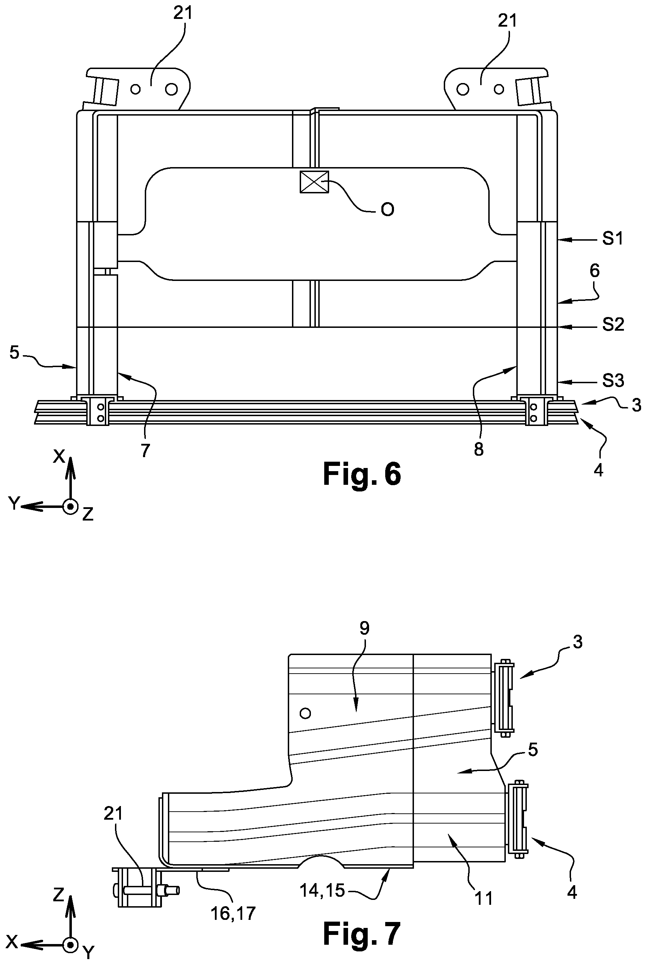

Comme représenté au figures 1 et 2, la partie avant 1 comprend un ensemble structurel 2 interposé suivant la direction longitudinale du véhicule entre deux traverses avant 3, 4 et le tablier 19 de fermeture de l'habitacle du véhicule.
L'ensemble structurel 2 est réalisé en coques de matériau composite, à base d'une matrice en résine thermodurcissable ou thermoplastique et d'un renfort en fibres de verre ou de carbone. L'épaisseur des coques est comprise entre 2 et 5 mm. Elle est typiquement de 3,5 mm dans le mode de réalisation décrit.
Les traverses avant 3, 4 s'étendent suivant la direction transversale Y. Ces traverses sont parfois désignées « traverses extrêmes avant » et sont destinées à être impactées en premier lors d'un choc frontal ou d'un choc piéton, afin de répartir les efforts tant longitudinalement que transversalement. Ces traverses comprennent une traverse supérieure 3 et une traverse inférieure 4 superposées, un espace étant ménagé entre les deux. Comme illustré à la figure 7, la traverse inférieure 3 est légèrement avancée par rapport à la traverse supérieure 4 pour mieux répondre aux préconisations techniques relatives au choc piéton.

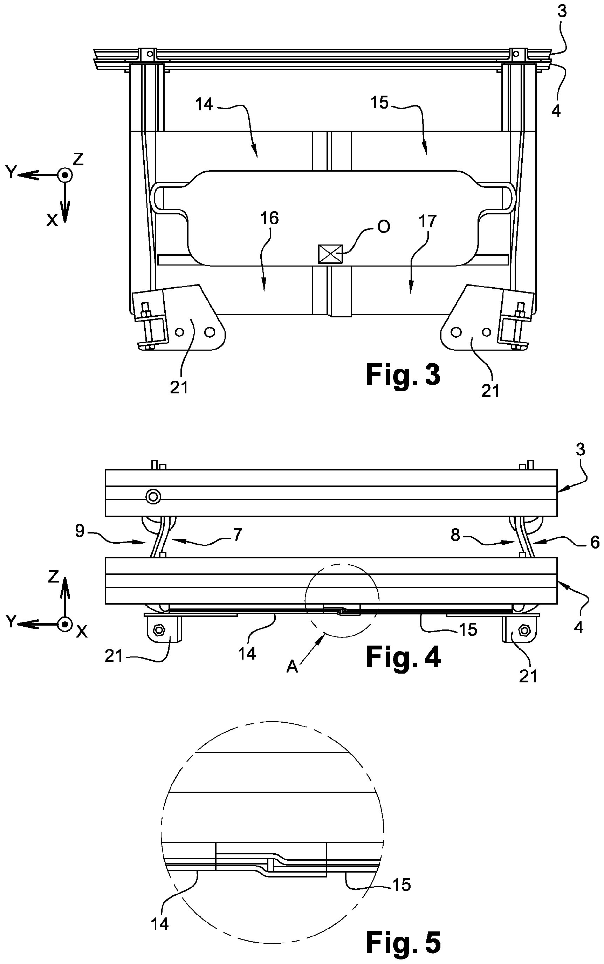

Le tablier 19 (figure 9) auquel se fixe l'ensemble structurel dans sa partie arrière désigne une cloison structurelle de séparation de l'habitacle 20 vis-à-vis de la partie avant 1 ou bloc avant. La partie avant 1 vient se fixer sur une face avant du tablier 19.
Selon l'invention illustrée aux figures 1 et 2, l'ensemble structurel 2 comprend deux coques extérieures droite 5 et gauche 6 et deux coques intérieures droite 7 et gauche 8.
Les coques sont assemblées et accolées deux par deux à gauche et à droite pour former un sous-ensemble de coques extérieure 6 et intérieur 8 gauche et un sous-ensemble de coques extérieure 5 et intérieure 7 droit. Dans un mode de réalisation de l'invention, la fixation des coques entre elles est typiquement réalisée par collage. La fixation par collage utilise par exemple une colle de type PU (polyuréthane) ou de type époxyde, ou de type cyanoacrylates. La colle peut être structurelle et/ou une colle à prise rapide (temps de réticulation rapide).
Dans d'autres modes de réalisation non illustrés de l'invention, on peut prévoir une fixation par laser, ou par induction ou par fixations positives (par exemple, par vis-écrous, rivets ou équivalents).
Chaque sous-ensemble de coques gauche 6, 8 et droit 5, 7 comprend un corps principal ayant la forme générale d'une paroi s'étendant suivant la direction longitudinale X et s'élevant suivant la direction verticale Z. Ces parois sont espacées suivant la direction transversale Y pour définir entre elles un espace accueillant des organes fonctionnels du véhicule, par exemple le GMP. En vue de dessus ou de dessous, comme illustré aux figures 6 et 3, l'ensemble structurel 2 à la forme générale d'un cadre ou rectangle orienté transversalement, dont les côtés longs sont matérialisés à l'avant par les traverses avant 3, 4, et à l'arrière par l'élément transversal 16, 17 (décrit ci-après) et dont les côtés courts sont matérialisés par les zones verticales (formant paroi) des sous-ensembles gauche 6, 8 et droit 5, 7.
Les coques extérieure et intérieure de chaque sous-ensemble gauche 6, 8 et droit 5, 7 sont conformées pour définir, de chaque côté du véhicule, des zones à sections localement élargie formant des raidisseurs. Ceux-ci sont intégrés dans la partie formant paroi des sous-ensembles de coques gauche 6, 8 et droit 5, 7. Dans l'exemple de réalisation illustré aux figures 1 et 2, on a prévu deux raidisseurs supérieurs 9, 10 et deux raidisseurs inférieurs 11, 12. Chaque sous-ensemble de coques gauche 6, 8 et droit 5, 7 comprend donc un raidisseur supérieur 9, 10 surplombant un raidisseur inférieur 11, 12.
Les raidisseurs 9-12 ont la forme générale de manchons s'étendant sensiblement suivant la direction longitudinale X du véhicule. Au sein de chaque sous-ensemble de coques gauche et droit, la surface de jonction entre les coques intérieure 7, 8 et extérieure 5, 6 s'étend suivant une direction sensiblement verticale. En référence aux figures 8A, 8B et 8C qui représentent différentes sections S1, S2, S3 transversales du sous-ensemble de coques 6, 8 du côté gauche, correspondant à des valeurs de X de -120mm, -260mm et -370mm (l'origine O du repère étant schématiquement représenté aux figures 3 et 6 et les sections S1-S3 représentées à la figure 6), on observe que les coques extérieure 6 et intérieure 8 ont des formes conjuguées au niveau des surfaces de jonctions de façon à être appliquées étroitement l'une contre l'autre. Ces surfaces de jonction sont interrompues localement lorsque la coque extérieure 6 et la coque intérieure 8 s'écartent l'une de l'autre pour former les raidisseurs 9-12. La partie jointive des coques 6, 8 située au-dessus du raidisseur supérieur 10 est sensiblement verticale. La partie jointive des coques 6, 8 située entre le raidisseur supérieur 10 et le raidisseur inférieur 12 s'étend de façon inclinée d'environ 20 à 30° par rapport à la verticale avec une zone inférieure plus proche d'une zone médiane du véhicule tandis qu'une zone supérieure de cette partie accolée est plus éloignée de la zone médiane. On entend par zone médiane une zone définie par un plan vertical et longitudinal du véhicule formant schématiquement un plan de symétrie de la structure. Les notions « extérieur(e) » et « intérieur(e) » sont également définies en relation avec cette zone médiane : « extérieur » s'applique à un élément tourné à l'opposé de cette zone médiane tandis que « intérieur » s'applique à un élément tourné en direction de cette zone médiane ou plus proche de celle-ci.

La partie jointive des coques 6, 8 située en dessous du raidisseur inférieur 12 s'étend de façon inclinée d'environ 30 à 50° par rapport à la verticale avec une zone inférieure plus éloignée d'une zone médiane du véhicule et une zone supérieure plus proche de cette zone médiane. Ces inclinaisons des parties accolées définissent l'inclinaison des plans de joint considérés localement entre la coque extérieure et la coque intérieure correspondante.
Le raidisseur supérieur 10 a une section YZ inscrite dans un rectangle ayant des dimensions d'environ 125 x 71mm. Le raidisseur inférieur 12 a une section YZ inscrite dans un rectangle ayant des dimensions d'environ 88 x 71mm, ces rectangles étant orientés verticalement. Ainsi la section allongée de ces raidisseurs est orientée verticalement. Le terme « inscrit » signifie que les sections des raidisseurs épousent au moins en partie les côtés de ces rectangles : les sections ont des côtés verticaux parallèles entre eux, tandis que les zones haute et basse des sections ont des formes arrondies dans lesquelles se situent les parties jointives des coques intérieure et extérieure. Les valeurs indiquées ci-dessus sont données à titre d'exemple non limitatif de l'invention, étant entendu que des valeurs s'écartant de plusieurs millimètres de ces dimensions restent incluent dans le cadre de l'invention.
Les sous-ensembles de coques côté gauche 6, 8 et côté droit 5, 7 sont symétriques par rapport au plan vertical longitudinal médian du véhicule.
Les raidisseurs supérieurs 9, 10 forment des voies de transmission et d'absorption d'effort supérieures, sensiblement suivant la direction longitudinale X, entre des extrémités de la traverse supérieure 3 et le tablier.
Les raidisseurs inférieurs 11, 12 forment des voies de transmission et d'absorption d'effort inférieures, sensiblement suivant la direction longitudinale X, entre des extrémités de la traverse inférieure 4 et le tablier.
Les sous-ensembles de coques sont chacun pourvus à leur base d'extensions 14, 15, 16, 17 se raccordant sensiblement dans une zone médiane du véhicule, considéré suivant la direction transversale Y. Ces extensions forment des entretoises ou éléments transversaux s'étendant sensiblement suivant la direction transversale Y du véhicule, depuis les bords inférieurs des sous-ensembles de coques gauche et droit. L'ensemble structurel 2 comprend une entretoise centrale 14, 15 assurant une fonction de stabilité. Elle maintient l'ensemble structurel en forme avant et pendant son montage. Cette entretoise centrale 14, 15 est formée de deux parties issues de chacun des sous-ensembles de coques gauche et droit. Chacune de ces deux parties est constituée d'une double couche de coques constituée par la superposition des coques extérieure et intérieure de chaque sous-ensemble. En référence aux figures 3 à 5, le raccordement des deux parties 14, 15 dans la zone médiane est réalisée par un recouvrement des bords libres formant d'un soyage. Les deux parties 14, 15 sont fixées l'une à l'autre par collage, dans le mode de réalisation de l'invention tel qu'illustré. Comme évoqué précédemment, selon d'autres variantes non illustrées de l'invention, la fixation peut être assurée par laser, ou induction ou fixations positives (vis-écrous, rivets ou équivalent).
Les extensions raccordant les sous-ensembles de coques gauche et droit comprennent également un élément transversal 16, 17 arrière ayant la forme générale d'une cornière à section en L dont une première branche s'étend sensiblement horizontalement et une seconde branche s'étend sensiblement verticalement. Cet ensemble transversal arrière est constitué de deux parties gauche 17 et droite 16 se raccordant sensiblement dans la zone médiane du véhicule. Chacune de ces deux parties 17, 16 est constituée d'une double couche de coques constituée par la superposition des coques extérieure et intérieure de chaque sous-ensemble. En référence aux figures 3 à 5, le raccordement des deux parties 16, 17 dans la zone médiane est réalisée par un recouvrement des bords libres formant d'un soyage. Les deux parties 16, 17 sont également fixées l'une à l'autre par collage.
La fixation de l'ensemble structurel 2 est assurée sur la face avant du tablier. Les raidisseurs supérieurs 9, 10 sont chacun fixés dans leur partie arrière à une zone d'appui médiane du tablier située dans la demi-moitié inférieure de celui-ci, considéré suivant la direction verticale. Les raidisseurs inférieurs 11, 12 sont fixés chacun à une zone d'appui inférieure du tablier située sensiblement au niveau d'un plancher de la structure du véhicule (non représenté). Compte tenu de la forme avancée de la zone d'appui médiane par rapport à la zone d'appui inférieure, l'extrémité arrière des raidisseurs supérieurs 9, 10 est plus avancée que l'extrémité arrière des raidisseurs inférieurs 11, 12, ce qui conditionne également une différence de longueurs entre les raidisseurs supérieurs et inférieurs. Comme on le voit par exemple à la figure 7, le rapport des longueurs suivant la direction longitudinale X entre les raidisseurs supérieurs et inférieurs est de l'ordre de 60%, ce rapport étant indiqué à titre uniquement indicatif et nullement limitatif.
Chaque raidisseur supérieur 9, 10 comporte une partie arrière creuse emmanchée sur un plot correspondant (non représenté) conformé sur la zone d'appui médiane du tablier 19. Des moyens de fixation additionnels notamment par vissage sont prévus pour solidariser le raidisseur supérieur 9, 10 et le plot correspondant. Le vissage est typiquement effectué transversalement ou verticalement pour verrouiller le raidisseur dans sa position emmanchée sur le plot issu du tablier 19. Les traverses avant supérieure 3 et inférieure 4 peuvent être métalliques. Elles sont fixées aux extrémités avant des raidisseurs supérieurs 9, 10 et inférieurs 11, 12 via des inserts de fixation 18 ayant une interface arrière engagée dans une partie creuse des raidisseurs et ayant en partie avant des moyens de bridage des extrémités latérales des traverses 3, 4. Ce bridage peut être réalisé par un système de tige-écrou, traversant de part en part la traverse et la retenant entre des pattes de maintien solidaires des inserts de fixation 18. Les inserts 18 peuvent être fixés aux extrémités avant des raidisseurs 9-12 via des rivets auto-perforants engagés suivant la direction transversale Y dans les coques extérieures 5, 6 et les inserts 18.
Dans un autre mode de réalisation non illustré de l'invention, les traverses avant supérieure et inférieure, ou au moins l'une de ces traverses, peuvent être réalisées en matériau composite à base d'une matrice en résine thermodurcissable ou thermoplastique et d'un renfort en fibres de verre ou de carbone.
Les sous-ensembles gauche 6, 8 et droit 5, 7 peuvent en outre supporter des équipements ou pièces additionnels. Par exemple les coques extérieures gauches 6 et droite 5 comportent des chapes de fixation 21 de triangle inférieur de suspension. Ceux-ci sont typiquement prévus dans les angles arrière de l'ensemble structurel 2 et en partie inférieure de celui-ci, où se rejoignent l'élément transversal arrière16, 17 et les raidisseurs inférieurs 11, 12 (figures 1-4 et 6, 7). Dans une variante de fixation non illustrée, les chapes de fixation pourraient également être intégrées aux coques extérieures 5 et 6 en adaptant celles-ci selon des formes adéquates.

Bien entendu, l'invention n'est pas limitée aux modes ou variantes de réalisation et d'assemblage décrits précédemment et comprends tous les équivalents techniques de ces moyens.
En particulier, les modes de fixations peuvent être basés sur l'assemblage laser, ou l'induction, ou des fixations positives (systèmes vis-écrous, ou rivets ou équivalents).
Les coques peuvent également être assemblées en combinant plusieurs modes de fixation parmi ceux décrits ci-dessus, dans des mêmes zones ou dans des zones différenciées.

## Revendications

1. Partie avant (1) de la structure d'un véhicule automobile comprenant un ensemble structurel (2) interposé suivant la direction longitudinale du véhicule entre au moins une traverse avant (3, 4) et un tablier (19) de fermeture de l'habitacle du véhicule, **caractérisé en ce que** l'ensemble structurel (2) comprend au moins une coque extérieure (5, 6) et au moins une coque intérieure (7, 8) accolées l'une à l'autre, les coques (5-8) étant conformées pour définir, de chaque côté du véhicule, au moins un raidisseur (9-12) ayant la forme générale d'un manchon s'étendant sensiblement suivant la direction longitudinale (X) du véhicule, le raidisseur (9-12) formant une voie de transmission et d'absorption d'effort entre une extrémité correspondante de la traverse avant (3, 4) et le tablier (19).

2. Partie avant (1) de la structure d'un véhicule selon la revendication 1, **caractérisé en ce que** l'ensemble structurel (2) est réalisé en matériau composite, à base d'une matrice en résine thermodurcissable ou thermoplastique et d'un renfort en fibres de verre ou de carbone.

3. Partie avant (1) de la structure d'un véhicule selon la revendication 1 ou 2, **caractérisé en ce que** l'ensemble structurel (2) comprend d'une part deux coques extérieures gauche (6) et droite (5), et d'autre part deux coques intérieures gauche (8) et droite (7), les coques étant assemblées deux par deux à gauche et à droite pour former un sous-ensemble de coques extérieure et intérieur gauche (6, 8) et un sous-ensemble de coques extérieure et intérieure droit (5, 7).

4. Partie avant (1) de la structure d'un véhicule selon la revendication 3, **caractérisé en ce que** les coques extérieure (5, 6) et intérieure (7, 8) de chaque sous ensemble gauche (6, 8) et droit (5, 7) sont conformées pour définir, de chaque côté du véhicule, au moins un raidisseur supérieur (9, 10) et un raidisseur inférieur (11, 12) ayant chacun la forme générale d'un manchon s'étendant sensiblement suivant la direction longitudinale (X) du véhicule, les raidisseurs supérieurs (9, 10) et inférieurs (11, 12) formant des voies de transmission et d'absorption d'effort respectivement supérieure et inférieure entre d'une part des extrémités correspondantes d'une traverse avant supérieure (3) et d'une traverse avant inférieure (4), et d'autre part le tablier (19).

5. Partie avant (1) de la structure d'un véhicule selon la revendication 4, **caractérisé en ce que** les sous-ensembles de coques gauche (6, 8) et droit (5, 7) comprennent chacun un corps principal ayant la forme générale d'une paroi sensiblement verticale dans laquelle sont conformés les raidisseurs supérieur (9, 10) et inférieur (11, 12), les sous-ensembles étant chacun pourvus à leur base d'extensions (14,15, 16, 17) se raccordant sensiblement dans une zone médiane du véhicule, considéré suivant la direction transversale (Y), ces extensions formant des entretoises ou éléments transversaux s'étendant sensiblement suivant la direction transversale (Y) du véhicule.

6. Partie avant (1) de la structure d'un véhicule selon la revendication 4 ou 5, **caractérisée en ce que** les raidisseurs supérieurs (9, 10) sont chacun fixés dans leur partie arrière à une zone d'appui médiane du tablier (19) située dans la demi-moitié inférieure de celui-ci, considéré suivant la direction verticale (Z), ces raidisseurs supérieurs (9, 10) surplombant les raidisseurs inférieurs (11, 12) fixés chacun à une zone d'appui inférieure du tablier (19) située sensiblement au niveau d'un plancher de la structure du véhicule.

7. Partie avant (1) de la structure d'un véhicule selon la revendication 6, **caractérisé en ce que** chaque raidisseur supérieur (9, 10) comporte une partie arrière creuse emmanchée sur un plot correspondant conformé sur la zone d'appui médiane du tablier (19), des moyens de fixation additionnels notamment par vissage étant prévus pour solidariser le raidisseur supérieur (9, 10) et le plot correspondant.

8. Partie avant (1) de la structure d'un véhicule selon l'une quelconque des revendications 5 à 7, **caractérisé en ce que** les extensions (14, 15, 16, 17) raccordant les sous-ensembles de coques gauche (6, 8) et droit (5, 7) comprennent une entretoise centrale (14, 15) s'étendant sensiblement horizontalement ainsi qu'un élément transversal (16, 17) arrière ayant la forme générale d'une cornière à section en L dont une première branche s'étend sensiblement horizontalement et une seconde branche s'étend sensiblement verticalement, ces extensions (14, 15, 16, 17) étant formées par la superposition des coques extérieure (5, 6) et intérieure (7, 8).

9. Partie avant (1) de la structure d'un véhicule automobile selon l'une quelconque des revendications 4 à 8, **caractérisé en ce qu'**une partie au moins des raidisseurs supérieurs (9, 10) et inférieurs (11, 12) à la forme générale d'un manchon s'évasant de l'avant vers l'arrière.

10. Partie avant (1) de la structure d'un véhicule automobile selon l'une quelconque des revendications 1 à 9, **caractérisé en ce que** les coques intérieure (7, 8) et extérieure (5, 6) sont fixées par collage.

11. Partie avant (1) de la structure d'un véhicule automobile selon l'une quelconque des revendications 1 à 9, **caractérisé en ce que** les coques intérieure (7, 8) et extérieure (5, 6) sont fixées par laser ou induction.

12. Partie avant (1) de la structure d'un véhicule automobile selon l'une quelconque des revendications 1 à 9, **caractérisé en ce que** les coques intérieure (7, 8) et extérieure (5, 6) sont fixées par des moyens de fixation positive, du type vis-écrou, rivet ou équivalent.

13. Partie avant (1) de la structure d'un véhicule automobile selon l'une quelconque des revendications 4 à 12, **caractérisé en ce qu'**au moins l'une des traverses avant supérieure (3) et inférieure (4) est métallique.

14. Partie avant (1) de la structure d'un véhicule automobile selon l'une quelconque des revendications 4 à 13, **caractérisé en ce qu'**au moins l'une des traverses avant supérieure et inférieure est réalisée en matériau composite à base d'une matrice en résine thermodurcissable ou thermoplastique et d'un renfort en fibres de verre ou de carbone.

15. Partie avant (1) de la structure d'un véhicule automobile selon l'une quelconque des revendications précédentes, **caractérisée en ce que** l'épaisseur des coques (5-8) est comprise entre 2 et 5 mm, et est en particulier de 3,5 mm.

16. Véhicule automobile **caractérisé en ce qu'**il comprend une partie avant (1) de structure selon l'une quelconque des revendications précédentes.

## Patentansprüche

1. Vorderteil (1) der Struktur eines Kraftfahrzeugs, welcher eine strukturelle Anordnung (2) umfasst, die entlang der Längsrichtung des Fahrzeugs zwischen wenigstens einem vorderen Querträger (3, 4) und einer Spritzwand (19) zum Verschluss des Innenraums des Fahrzeugs angeordnet ist, **dadurch gekennzeichnet, dass** die strukturelle Anordnung (2) wenigstens eine äußere Schale (5, 6) und wenigstens eine innere Schale (7, 8) umfasst, die aneinandergefügt sind, wobei die Schalen (5-8) dafür ausgebildet sind, auf jeder Seite des Fahrzeugs wenigstens eine Versteifung (9-12) mit der allgemeinen Form einer Hülse zu definieren, die sich im Wesentlichen entlang der Längsrichtung (X) des Fahrzeugs erstreckt, wobei die Versteifung (9-12) einen Weg zur Kraftübertragung und -aufnahme zwischen einem Ende, das dem vorderen Querträger (3, 4) entspricht, und der Spritzwand (19) bildet.

2. Vorderteil (1) der Struktur eines Fahrzeugs nach Anspruch 1, **dadurch gekennzeichnet, dass** die strukturelle Anordnung (2) aus Verbundmaterial auf der Basis einer Matrix aus duroplastischem oder thermoplastischem Harz und einer Verstärkung aus Glas- oder Kohlenstofffasern hergestellt ist.

3. Vorderteil (1) der Struktur eines Fahrzeugs nach Anspruch 1 oder 2, **dadurch gekennzeichnet, dass** die strukturelle Anordnung (2) einerseits zwei äußere Schalen, eine linke (6) und eine rechte (5), und andererseits zwei innere Schalen, eine linke (8) und eine rechte (7), umfasst, wobei die Schalen links und rechts paarweise zusammengebaut sind, um eine Unteranordnung aus äußerer und innerer linker Schale (6, 8) und eine Unteranordnung aus äußerer und innerer rechter Schale (5, 7) zu bilden.

4. Vorderteil (1) der Struktur eines Fahrzeugs nach Anspruch 3, **dadurch gekennzeichnet, dass** die äußere (5, 6) und die innere (7, 8) Schale jeder Unteranordnung, der linken (6, 8) und der rechten (5, 7), dafür ausgebildet sind, auf jeder Seite des Fahrzeugs wenigstens eine obere Versteifung (9, 10) und eine untere Versteifung (11, 12) jeweils mit der allgemeinen Form einer Hülse zu definieren, die sich im Wesentlichen entlang der Längsrichtung (X) des Fahrzeugs erstreckt, wobei die oberen (9, 10) und unteren (11, 12) Versteifungen einen oberen bzw. unteren Weg zur Kraftübertragung und -aufnahme zwischen einerseits entsprechenden Enden eines oberen vorderen Querträgers (3) und eines unteren vorderen Querträgers (4) und andererseits der Spritzwand (19) bilden.

5. Vorderteil (1) der Struktur eines Fahrzeugs nach Anspruch 4, **dadurch gekennzeichnet, dass** die linke (6, 8) und die rechte (5, 7) Unteranordnung von Schalen jeweils einen Hauptkörper mit der allgemeinen Form einer im Wesentlichen vertikalen Wand, in welcher die obere (9, 10) und die untere (11, 12) Versteifung ausgebildet sind, umfassen, wobei die Unteranordnungen jeweils an ihrem Fuß mit Verlängerungen (14, 15, 16, 17) versehen sind, die sich im Wesentlichen, entlang der Querrichtung (Y) gesehen, in einem mittleren Bereich des Fahrzeugs anschließen, wobei diese Verlängerungen Querstreben oder Querelemente bilden, die sich im Wesentlichen entlang der Querrichtung (Y) des Fahrzeugs erstrecken.

6. Vorderteil (1) der Struktur eines Fahrzeugs nach Anspruch 4 oder 5, **dadurch gekennzeichnet, dass** die oberen Versteifungen (9, 10) jeweils in ihrem hinteren Teil an einem mittleren Stützbereich der Spritzwand (19) befestigt sind, der sich, entlang der vertikalen Richtung (Z) gesehen, in der unteren halben Hälfte derselben befindet, wobei diese oberen Versteifungen (9, 10) über die unteren Versteifungen (11, 12) hinaus vorstehen, die jeweils an einem unteren Stützbereich der Spritzwand (19) befestigt sind, der sich im Wesentlichen auf der Höhe eines Bodens der Struktur des Fahrzeugs befindet.

7. Vorderteil (1) der Struktur eines Fahrzeugs nach Anspruch 6, **dadurch gekennzeichnet, dass** jede obere Versteifung (9, 10) einen hohlen hinteren Teil aufweist, der auf einen entsprechenden Klotz aufgeschoben ist, der auf dem mittleren Stützbereich der Spritzwand (19) ausgebildet ist, wobei zusätzliche Mittel zur Befestigung, insbesondere durch Verschrauben, vorgesehen sind, um die obere Versteifung (9, 10) und den entsprechenden Klotz fest miteinander zu verbinden.

8. Vorderteil (1) der Struktur eines Fahrzeugs nach einem der Ansprüche 5 bis 7, **dadurch gekennzeichnet, dass** die Verlängerungen (14, 15, 16, 17), welche die linke (6, 8) und die rechte (5, 7) Unteranordnung von Schalen verbinden, eine zentrale Querstrebe (14, 15), die sich im Wesentlichen horizontal erstreckt, sowie ein hinteres Querelement (16, 17) mit der allgemeinen Form eines Winkelprofils mit L-förmigen Querschnitt, von dem ein erster Schenkel sich im Wesentlichen horizontal erstreckt und ein zweiter Schenkel sich im Wesentlichen vertikal erstreckt, umfassen, wobei diese Verlängerungen (14, 15, 16, 17) durch das Übereinanderlegen der äußeren (5, 6) und der inneren (7, 8) Schale gebildet werden.

9. Vorderteil (1) der Struktur eines Kraftfahrzeugs nach einem der Ansprüche 4 bis 8, **dadurch gekennzeichnet, dass** wenigstens ein Teil der oberen (9, 10) und unteren (11, 12) Versteifungen die allgemeine Form einer Hülse aufweist, die sich von vorn nach hinten erweitert.

10. Vorderteil (1) der Struktur eines Kraftfahrzeugs nach einem der Ansprüche 1 bis 9, **dadurch gekennzeichnet, dass** die innere (7, 8) und die äußere (5, 6) Schale durch Kleben befestigt sind.

11. Vorderteil (1) der Struktur eines Kraftfahrzeugs nach einem der Ansprüche 1 bis 9, **dadurch gekennzeichnet, dass** die innere (7, 8) und die äußere (5, 6) Schale durch Laser oder Induktion befestigt sind.

12. Vorderteil (1) der Struktur eines Kraftfahrzeugs nach einem der Ansprüche 1 bis 9, **dadurch gekennzeichnet, dass** die innere (7, 8) und die äußere (5, 6) Schale durch Mittel zur formschlüssigen Befestigung des Typs Schraube-Mutter, Niet oder dergleichen befestigt sind.

13. Vorderteil (1) der Struktur eines Kraftfahrzeugs nach einem der Ansprüche 4 bis 12, **dadurch gekennzeichnet, dass** wenigstens einer von dem oberen (3) und unteren (4) vorderen Querträger metallisch ist.

14. Vorderteil (1) der Struktur eines Kraftfahrzeugs nach einem der Ansprüche 4 bis 13, **dadurch gekennzeichnet, dass** wenigstens einer von dem oberen und unteren vorderen Querträger aus Verbundmaterial auf der Basis einer Matrix aus duroplastischem oder thermoplastischem Harz und einer Verstärkung aus Glas- oder Kohlenstofffasern hergestellt ist.

15. Vorderteil (1) der Struktur eines Kraftfahrzeugs nach einem der vorhergehenden Ansprüche, **dadurch gekennzeichnet, dass** die Dicke der Schalen (5-8) zwischen 2 und 5 mm liegt und insbesondere 3,5 mm beträgt.

16. Kraftfahrzeug, **dadurch gekennzeichnet, dass** es einen Vorderteil (1) der Struktur nach einem der vorhergehenden Ansprüche umfasst.

## Claims

1. Front portion (1) of the structure of a motor vehicle comprising a structural assembly (2) which is interposed in the longitudinal direction of the vehicle between at least one front cross-member (3, 4) and a bulkhead (19) for closing the passenger space of the vehicle, **characterized in that** the structural assembly (2) comprises at least one external shell (5, 6) and at least one internal shell (7, 8) which are joined to each other, the shells (5-8) being formed to define, at each side of the vehicle, at least one reinforcement member (9-12) which is generally in the form of a sleeve which extends substantially in the longitudinal direction (X) of the vehicle, the reinforcement member (9-12) forming a path for transmission and absorption of force between a corresponding end of the front cross-member (3, 4) and the bulkhead (19).

2. Front portion (1) of the structure of a vehicle according to Claim 1, **characterized in that** the structural assembly (2) is produced from composite material, based on a matrix of thermosetting or thermoplastic resin and a reinforcement of glass or carbon fibers.

3. Front portion (1) of the structure of a vehicle according to Claim 1 or 2, **characterized in that** the structural assembly (2) comprises, on the one hand, two external shells, a left shell (6) and a right shell (5), and, on the other hand, two internal shells, a left shell (8) and a right shell (7), the shells being assembled in pairs at the left-hand side and right-hand side in order to form a sub-assembly of left external and internal shells (6, 8) and a sub-assembly of right external and internal shells (5, 7).

4. Front portion (1) of the structure of a vehicle according to Claim 3, **characterized in that** the external shells (5, 6) and internal shells (7, 8) of each left sub-assembly (6, 8) and right sub-assembly (5, 7) are formed to define, at each side of the vehicle, at least one upper reinforcement member (9, 10) and one lower reinforcement member (11, 12) which are each generally in the form of a sleeve which extends substantially in the longitudinal direction (X) of the vehicle, the upper reinforcement members (9, 10) and lower reinforcement members (11, 12) forming upper and lower force absorption and transmission paths, respectively, between, on the one hand, corresponding ends of an upper front cross-member (3) and a lower front cross-member (4) and, on the other hand, the bulkhead (19).

5. Front portion (1) of the structure of a vehicle according to Claim 4, **characterized in that** the sub-assemblies of the left shells (6, 8) and right shells (5, 7) each comprise a main body which is generally in the form of a substantially vertical wall, in which the upper reinforcement members (9, 10) and lower reinforcement members (11, 12) are formed, the sub-assemblies each being provided at the base thereof with extensions (14, 15, 16, 17) which are connected substantially in a center zone of the vehicle, when viewed in the transverse direction (Y), these extensions forming cross-members or transverse elements which extend substantially in the transverse direction (Y) of the vehicle.

6. Front portion (1) of the structure of a vehicle according to Claim 4 or 5, **characterized in that** the upper reinforcement members (9, 10) are each fixed in the rear portion thereof to a center support zone of the bulkhead (19) which is located in the lower half thereof, when viewed in the vertical direction (Z), these upper reinforcement members (9, 10) overhanging the lower reinforcement members (11, 12) which are each fixed to a lower support zone of the bulkhead (19) which is located substantially in the region of a floor of the structure of the vehicle.

7. Front portion (1) of the structure of a vehicle according to Claim 6, **characterized in that** each upper reinforcement member (9, 10) comprises a hollow rear portion which is fitted to a corresponding stud which is formed on the center support zone of the bulkhead (19), additional fixing means, in particular by means of screwing, being provided in order to fix the upper reinforcement member (9, 10) and the corresponding stud.

8. Front portion (1) of the structure of a vehicle according to any one of Claims 5 to 7, **characterized in that** the extensions (14, 15, 16, 17) which connect the sub-assemblies of the left shell (6, 8) and right shell (5, 7) comprise a central cross-member (14, 15) which extends substantially horizontally and a rear transverse element (16, 17) which is generally in the form of an angled member having an L-shaped cross-section, a first branch of which extends substantially horizontally and a second branch of which extends substantially vertically, these extensions (14, 15, 16, 17) being formed by the superimposition of the external shells (5, 6) and internal shells (7, 8).

9. Front portion (1) of the structure of a motor vehicle according to one of Claims 4 to 8, **characterized in that** at least a portion of the upper reinforcement members (9, 10) and lower reinforcement members (11, 12) is generally in the form of a sleeve which expands from the front to the rear.

10. Front portion (1) of the structure of a motor vehicle according to any one of Claims 1 to 9, **characterized in that** the internal shells (7, 8) and external shells (5, 6) are fixed by means of adhesive bonding.

11. Front portion (1) of the structure of a motor vehicle according to any one of Claims 1 to 9, **characterized in that** the internal shells (7, 8) and external shells (5, 6) are fixed by means of laser or induction.

12. Front portion (1) of the structure of a motor vehicle according to any one of Claims 1 to 9, **characterized in that** the internal shells (7, 8) and external shells (5, 6) are fixed by positive fixing means of the screw/nut type, rivet or the like.

13. Front portion (1) of the structure of a motor vehicle according to any one of Claims 4 to 12, **characterized in that** at least one of the front upper cross-member (3) and lower cross-member (4) is of metal.

14. Front portion (1) of the structure of a motor vehicle according to any one of Claims 4 to 13, **characterized in that** at least one of the front upper and lower cross-members is produced from composite material based on a matrix of thermosetting or thermoplastic resin, and a reinforcement of glass or carbon fibers.

15. Front portion (1) of the structure of a motor vehicle according to any one of the preceding claims, **characterized in that** the thickness of the shells (5-8) is between 2 and 5 mm, and is in particular 3.5 mm.

16. Motor vehicle, **characterized in that** it comprises a front structural portion (1) according to one of the preceding claims.
